# EUROPÄISCHE PATENTSCHRIFT

(11) **EP 0 885 268 B1**
(45) Veröffentlichungstag und Bekanntmachung des Hinweises auf die Patenterteilung: **22.12.1999**
(21) Anmeldenummer: 97906174.4
(22) Anmeldetag: 06.03.1997
(51) Int. Cl.: C09D 191/08, C09D 5/08, C08L 91/08

(54) **KORROSIONSSCHUTZMITTEL**
ANTICORROSIVE AGENT
AGENT ANTICORROSION

(30) Priorität: 06.03.1996 DE 19608679
(43) Veröffentlichungstag der Anmeldung: 23.12.1998
(73) Patentinhaber: Schümann Sasol GmbH & Co. KG, 20457 Hamburg (DE)
(72) Erfinder: VOGEL, Werner, D-22359 Hamburg (DE); SCHWITTAY, Winfried, D-72218 Wildberg (DE); FREUDENBERG, Werner, D-01187 Dresden (DE)
(74) Vertreter: Müller, Enno, Dipl.-Ing.
(86) Internationale Anmeldenummer: EP9701120
(87) Internationale Veröffentlichungsnummer: WO9732938

(56) Entgegenhaltungen:
- EP-A- 0 414 967
- WO-A-89/04856
- US-A- 4 729 791
- US-A- 5 294 251

## Beschreibung

Die Erfindung betrifft ein Korrosionsschutzmittel.

Korrosionsschutzmittel, auch solche die auf einer Paraffinbasis beruhen, sind bereits bekanntgeworden. Man verwendet sie bspw. zur Konservierung von Hohlräumen und Unterböden im Kraftfahrzeugbereich. Üblicherweise wird ein solches Korrosionsmittel als lösungshaltiges oder wässriges Beschichtungsmittel hergestellt und bei Raumtemperatur oder erhöhter Raumtemperatur von bis zu 45° C auf die zu schützende Fläche aufgebracht. Durch Verdampfen des Lösungsmittels oder des Wassers bildet sich ein verfestigter Korrosionsschutzmittelfilm. Das Lösungsmittel ist erforderlich, um eine auch bei erhöhten Temperaturen noch feste wachsartige Korrosionsschutzmittelschicht auftragen zu können.

Es sind auch bei Raumtemperatur aufzubringende lösungsmittelfreie Beschichtungen bekannt, welche einen hohen Anteil an Polymeren aufweisen. Die Polymere vernetzen mit Luftsauerstoff. Diese bekannten Korrosionsschutzmittel besitzen auch einen geringen Wachs- oder Paraffinanteil, welcher jedoch hinsichtlich der Produkteigenschaften nicht bestimmend ist.

Es ist darüber hinaus ein Korrosions-Schutzmittel-System bekannt, was gemeinhin als "Flutwachs-Verfahren" bezeichnet wird.

Während die zunächst genannten Verfahren aufgrund der "physikalischen" und "chemischen Trocknung" die Tendenz zeigen, nach der Applikation noch nachzulaufen, was auch zu einer nicht akzeptierbaren Verschmutzung des Arbeitsplatzes führt, ist bei dem letztgenannten Flutwachs-Verfahren eine erforderliche hohe Applikationstemperatur von ca 120°C gegeben. Zudem sind die für dieses Verfahren erforderlichen Einrichtungen vergleichsweise kostenaufwendig, d. h. es entstehen hohe Investitions- und Betriebskosten.

Im Hinblick auf den vorbeschriebenen Stand der Technik beschäftigt sich die Erfindung mit der technischen Problematik, ein wachsartiges Korrosionsschutzmittel auf Paraffinbasis anzugeben, welches lösungsmittelfrei applizierbar ist und möglichst keine oder wenig Tendenz zum Nachlaufen zeigt. Es ist auch angestrebt, daß das Korrosionsmittelschutzmittel hinsichtlich des anwendbaren Applizierverfahrens vorteilhaft ist, bspw. eine Sprühapplizierung ermöglicht, gegebenenfalls bei erhöhter Raumtemperatur.

Diese technische Problematik ist zunächst und im wesentlichen beim Gegenstand des Anspruches 1 gelöst, wobei darauf abgestellt ist, daß das Korrosionsschutzmittel einen Paraffinanteil und einen Anteil von bspw. an Luftsauerstoff vernetzenden Polymeren aufweist, wobei der Paraffinanteil zwischen 10 % und 70 % liegt. Das hier vorzugsweise verwendete niedrig schmelzende, teilweise oxidierte Paraffin wirkt als Lösemittel und ersetzt die bekannten, vorstehend behandelten Lösungsmittel. Dadurch, daß das Korrosionsschutzmittel einen Anteil von vernetzenden Polymeren aufweist, ist es möglich, hinsichtlich des Paraffinanteils relativ niedriggrädiges Paraffin, also Paraffin mit einem niedrigen Erstarrungspunkt einzusetzen. Bspw. wird hier Paraffin mit einem Erstarrungspunkt von 25 bis 60° C bevorzugt eingesetzt. Ein solches Paraffin hat den Vorteil, daß das Korrosionsschutzmittel bei relativ niedrigen Temperaturen bereits flüssig ist und ohne weiteres appliziert werden kann, bspw. durch Aufspritzen. Das Paraffin liegt also vergleichbar wie bei dem Flutwachsverfahren in flüssiger Form zum Applizieren vor. Der enthaltene Anteil an Polymeren führt aber auch dazu, daß das aufgebrachte Korrosionsschutzmittel relativ rasch filmartig durch die vernetzenden Polymere aushärtet. Über Art und Menge des Polymersystems lassen sich die gewünschten Aushärtungsbedingungen und -zeiten einstellen, so daß noch einige Zeit eine mechanische Entfernung möglich ist, bspw. durch Abwischen. Hinsichtlich des Paraffinanteils kann es sich auch zumindest teilweise um natürliches Paraffin handeln. Weiter kann das Korrosionsschutzmittel einen Füllstoffanteil enthalten. Der Polymeranteil kann zwischen 3 und 30 % liegen und der Füllstoffanteil vorzugsweise zwischen 3 und 40 %. Hinsichtlich der Zeit, die bis zum Vernetzen im Sinne einer festen Schicht der Polymere nach einer Applizierung vergeht, sind bevorzugt diese steuernden Bestandteile in dem Korrosionsschutzmittel, nämlich sogenannte Sikkativmittel, enthalten. Diese können bspw. Mangansalze oder sonstige Vernetzungsbeschleuniger sein. Vorrangig ist jedoch hinsichtlich des Aufbringens auf das zu schützende Teil oder die zu schützende Fläche eine Temperatursteuerung, mit der Filmbildung, Penetration, Verlaufen und Nachtropfverhalten gezielt beeinflußt werden können. Wegen des niedrigen Erstarrungspunktes des Paraffinanteils des hier beschriebenen Korrosionsschutzmittel, genügt es, die zu schützende Fläche etwa auf diese Erstarrungstemperatur zu erhitzen und nach der Applizierung unter die Erstarrungstemperatur abzukühlen oder sogar die zu schützende Fläche während der Applizierung auf einer deutlich niedrigeren Temperatur als es der Erstarrungstemperatur des Paraffins entspricht, zu halten und ggf. anschließend zum Erreichen eines gleichmäßigen Verlaufens des aufgssprühten Materials kurzzeitig über die Erstarrungstemperatur hinaus zu erwärmen.

Es kann mit einem konventionellen Spritzverfahren bei etwa 30 bis 45° C appliziert werden. Das Korrosionsschutzmittel besitzt eine hohen Wachsanteil. Nach Abkühlen der beschichteten Objekte auf Temperaturen unterhalb der Applikationstemperatur bilden sich die gewünschten wachsartigen Filme aus.

### Beispiel:

Eine beispielhafte Formulierung eines hier betroffenen Korrosionsschutzmittels enthält beispielsweise 25 % Paraffin, 35 % Ca-Sulfonat (als eigentliches Korrosionsschutzmittel), etwa 20 % Alkydharz (Polymer) und etwa 20 % Talkum (Silikat). Bei dem Paraffin handelt es sich um oxidiertes Paraffin, hier sogenanntes Ablaufparaffin. Bei einer Variante kann auch das Alkydharz zunächst nicht vorhanden sein und vom Endanwender später ein geeignetes Polymer zugesetzt werden.

Ein weiteres Beispiel setzt sich aus 35 % Paraffin, 5 % Mikrowachs, 35 % Calciumsulfonat, 5 % Polymer, 8 % Kreide und 12 % Talkum zusammen. Bei dem genannten Mikrowachs handelt es sich bekanntlich auch um ein Gemisch aus unterschiedlichen Kohlenwasserstoffen, wie bei einem sonstigen Paraffin auch, jedoch enthält dieses Gemisch überwiegend Iso-Paraffine.

Allgemeiner bevorzugt für eine Formulierung des Korrosionsschutzmittels sind folgende Bereiche: 20 bis 40 % anoxidiertes Paraffin, 25 bis 40 % Ca-Sulfonat, 5 bis 20 % Polymere wie Alkydharze, PVC-Copolymerisate, Polyacrylate, PE-Wachse, synthetische Hartwachse, 2 bis 10 % Mikrowachse und 10 bis 20 % Füllstoffe wie etwa Kreide oder Silikate.

Alle offenbarten Merkmale sind erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Korrosionsschutzmittel, gekennzeichnet durch einen Paraffinanteil und einen Anteil von vernetzenden, bspw. an Luftsauerstoff vernetzenden Polymeren, wobei der Paraffinanteil zwischen 10 % und 70 % liegt.

2. Korrosionsschutzmittel nach Anspruch 1, dadurch gekennzeichnet, daß der Paraffinanteil einen Erstarrungspunkt zwischen 25 und 60° C aufweist.

3. Korrosionsschutzmittel nach einem oder mehreren der vorhergehenden Ansprüche, dadurch gekennzeichnet, daß ein Füllstoffanteil enthalten ist.

4. Korrosionsschutzmittel nach einem oder mehreren der vorhergehenden Ansprüche, dadurch gekennzeichnet, daß der Polymeranteil zwischen 3 % und 30 % beträgt.

5. Korrosionsschutzmittel nach einem oder mehreren der vorhergehenden Ansprüche, dadurch gekennzeichnet, daß der Fällstoffanteil zwischen 5 % und 40 % beträgt.

## Revendications

1. Un produit protecteur anticorrosion caractérisé par une proportion de paraffines et une proportion de polymères se réticulant, par exemple se réticulant par l'oxygène de l'air, la proportion de paraffines étant située entre 10 et 70 %.

2. Un produit protecteur anticorrosion selon la revendication 1, caractérisé en ce que la proportion de paraffines présente un point de ramollissement compris entre 25 et 60°C.

3. Un produit protecteur anticorrosion selon l'une ou plusieurs des revendications précédentes, caractérisé en ce qu'il contient une proportion de charge.

4. Un produit protecteur anticorrosion selon l'une ou plusieurs des revendications précédentes, caractérisé en ce que la proportion de polymères est comprise entre 3 et 30 %.

5. Produit protecteur anticorrosion selon l'une ou plusieurs des revendications précédentes, caractérisé en ce que la proportion de charge est comprise entre 5 et 40 %.

## Claims

1. Corrosion protection agent, characterised by a paraffinic portion and a portion of cross-linking polymers, for example polymers cross-linking in air oxygen, wherein the paraffinic portion lies between 10 % and 70 %.

2. Corrosion protection agent according to claim 1, characterised in that the paraffinic portion has a solidification point between 25 and 60°C.

3. Corrosion protection agent according to one or more of the preceding claims, characterised in that a filler portion is present.

4. Corrosion protection agent according to one or more of the preceding claims, characterised in that the polymer portion is between 3 % and 30 %.

5. Corrosion protection agent according to one or more of the preceding claims, characterised in that the filler portion is between 5 % and 40 %.
